# FASCICULE DE BREVET EUROPEEN

(11) **EP 2 209 873 B1**
(45) Date de publication et mention de la délivrance du brevet: **22.06.2011**
(21) Numéro de dépôt: 08871299.7
(22) Date de dépôt: 24.10.2008
(51) Int. Cl.: C10G 45/00, C10G 47/00, C10G 49/00, B01J 8/24, C10G 49/12, C10G 45/16, C10G 45/08, B01J 8/22

(54) **PROCEDE D' HYDROCONVERSION DE CHARGES LOURDES EN LIT BOUILLONNANT AVEC INJECTION DE LA CHARGE EN TETE DE REACTEUR**
VERFAHREN ZUR HYDROUMWANDLUNG SCHWERER ROHMATERIALIEN IN EINEM FLIESSBETT MIT VON OBEN ERFOLGENDER EINFÜLLUNG DES ROHMATERIALS IN DEN REAKTOR
PROCESS FOR THE HYDROCONVERSION OF HEAVY FEEDSTOCKS IN AN EBULLATED BED WITH INJECTION OF FEEDSTOCK AT THE TOP OF THE REACTOR

(30) Priorité: 12.11.2007 FR 0707930
(43) Date de publication de la demande: 28.07.2010
(73) Titulaire: IFP Energies nouvelles, 92852 Rueil-Malmaison Cedex (FR)
(72) Inventeur: GAUTHIER, Thierry, F-69530 Brignais (FR); VERSTRAETE, Jan, F-69008 Lyon (FR); MAGET, Simon, 69003 Lyon (FR)
(86) Numéro de dépôt international: PCT/FR2008/001504
(87) Numéro de publication internationale: WO 2009/092877

(56) Documents cités:
- US-B1- 6 280 606
- GAUTHIER ET AL: "Impact of vaporization in a residue hydroconversion process" CHEMICAL ENGINEERING SCIENCE, OXFORD, GB, vol. 62, no. 18-20, 21 août 2007 (2007-08-21), pages 5409-5417, XP022207988 ISSN: 0009-2509

## Description

### Art Antérieur

L'invention concerne un procédé d'hydroconversion de charges pétrolières en lit bouillonnant. Il permet notamment de traiter directement des charges brutes, rendant ainsi possible son intégration dans les schémas de raffinage classiques. Il permet également d'améliorer l'efficacité de la mise en oeuvre réactionnelle de l'hydroconversion.

L'hydroconversion de charges lourdes en lit bouillonnant est utilisée depuis plus de 50 ans et a subi de nombreuses évolutions qui ont fait l'objet de nombreux brevets et publications.

En 1968, S.B Alpert et al. décrivent dans le document US 3,412,010 un procédé dans lequel la charge est introduite avec l'hydrogène en bas du réacteur dans une boîte de distribution située sous le lit catalytique et mélangée avec une partie du liquide recyclé prélevé en aval du lit catalytique.

Récemment, un article de Rana et al. (Fuel, 86, 1216-1231, 2007) décrit bien le procédé et les conditions de fonctionnement caractéristiques des réacteurs en lit bouillonnant pour l'hydroconversion de résidus.

Dans un grand nombre de brevets, il est décrit qu'une charge hydrocarbonée est introduite avec de l'hydrogène et les fluides traversent en mode ascendant un lit de catalyseur dans des conditions de vitesse permettant la fluidisation du catalyseur et ainsi l'expansion du lit. Celles-ci sont également assurées grâce au recyclage d'une fraction liquide circulant dans un conduit de recycle et une pompe de recycle permet de réinjecter le liquide dans le fond du réacteur. D'amples détails figurent, entre autres, dans les documents US 6,153,087, US 6,436,279, US 3,412,010, US 4,792,391 et US 4,990,241.

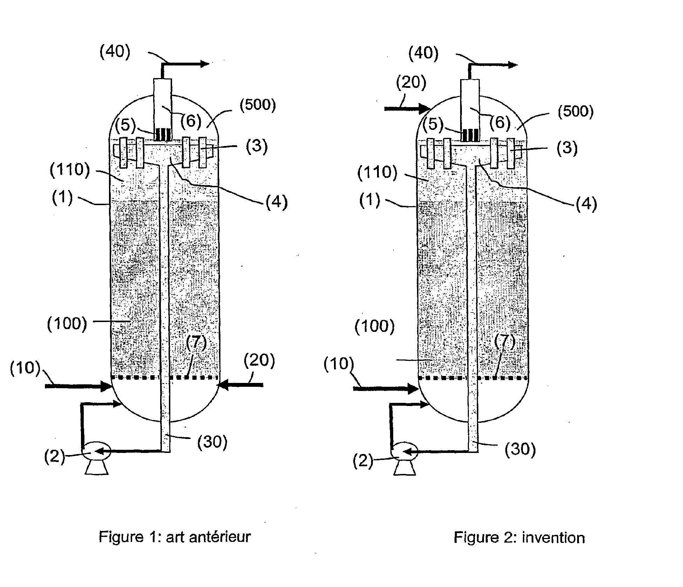

Parmi ces documents, il est à signaler que les figures 1 de US 4,792,391 et US 4,990,241 décrivent parfaitement l'injection de la charge et de l'hydrogène en fond de réacteur.

Par ailleurs, le document GB 2,126,494 décrit un dispositif particulier permettant l'injection du gaz et du liquide en fond du réacteur.

Par ailleurs, le brevet US 6,280,606 décrit un procédé de conversion d'une fraction d'hydrocarbures provenant d'une distillation atmosphérique suivie d'une distillation sous vide d'un brut pétrolier. La distillation du brut permet de séparer un distillat sous vide (DSV) et un résidu sous vide (RSV) qui sont ensuite respectivement soumis à un hydrotraitement et à une hydroconversion dans des réacteurs en lit bouillonnant. La charge introduite dans le réacteur d'hydroconversion est essentiellement liquide aux conditions du procédé.

L'article "Impact of vaporization in a residue hydroconversion process" de Th. Gauthier, J.P. Héraud, S. Kressmann, J. Verstraete (Chemical Engineering Science 62 (2007) 5409-5417) décrit également un procédé d'hydroconversion en lit bouillonnant dans lequel on injecte la charge en fond de réacteur.

Lorsque le raffineur souhaite valoriser un brut contenant des fractions lourdes en quantités importantes, il peut être intéressant de valoriser le brut lourd en effectuant une conversion modérée et une désulfuration partielle de façon à rendre le brut ainsi traité plus facilement intégrable dans des schémas de raffinage classiques. Cette opération est effectuée à proximité des lieux de production grâce à la combinaison d'opérations de distillation atmosphérique, de distillation sous vide et d'hydroconversion mais cette combinaison avec un complexe de raffinage classique est coûteuse. Dans certains cas, il serait donc avantageux de s'affranchir de l'opération de distillation en amont du procédé d'hydroconversion.

La demanderesse a découvert qu'il était possible de proposer un nouveau procédé permettant d'effectuer l'hydroconversion en lit bouillonnant de charges lourdes contenant une proportion significative de fractions vaporisables aux conditions de l'hydroconversion, en s'affranchissant d'un fractionnement initial de la charge en amont et ce sans altérer le fonctionnement du réacteur d'hydroconversion.

Le procédé selon l'invention met en oeuvre à la fois une injection de la charge à traiter en tête de réacteur d'hydroconversion en lit bouillonnant dans le ciel gazeux et un dispositif interne au réacteur de séparation de la fraction vaporisable et de la fraction liquide.

Le procédé selon l'invention est avantageusement mis en oeuvre pour l'hydroconversion de charges pétrolières, et notamment pour le traitement direct, c'est à dire en l'absence d'étape de distillation en amont dudit procédé, de bruts contenant une fraction significative (supérieure à 10% poids) de composés dont la température d'ébullition est inférieure à 340°C.

Le procédé selon l'invention est particulièrement adapté pour l'hydroconversion de bruts, de préférence dessalés, après flash (selon la terminologie anglo-saxonne) aux conditions de température et de pression à la sortie du puits de production de brut.

### Résumé de l'invention

L'invention concerne un procédé d'hydroconversion mettant en oeuvre au moins un réacteur en lit bouillonnant pour lequel l'injection de la charge est effectuée en tête dudit réacteur, dans le ciel gazeux et incluant une séparation de ladite charge à l'intérieur du réacteur en une fraction vaporisée et en une fraction liquide.

La fraction liquide est soumise aux réactions d'hydroconversion et la fraction vaporisée est extraite sous forme gazeuse en tête du réacteur avec l'effluent liquide hydroconverti.

L'invention porte également sur le réacteur permettant de mettre en oeuvre ledit procédé.

### Description détaillée de l'invention

L'invention a pour objet un procédé d'hydroconversion d'une charge pétrolière lourde dans un réacteur en lit bouillonnant dans lequel:
a) on injecte ladite charge en tête de réacteur dans le ciel gazeux,
b) ladite charge est séparée à l'intérieur du réacteur en une fraction vaporisée, aux conditions de température et de pression du réacteur, et en une fraction liquide,
c) dans ledit réacteur, ladite fraction liquide est mise en contact avec au moins un catalyseur d'hydroconversion avec de l'hydrogène dans des conditions telles que la pression absolue est comprise entre 3 et 50 MPa, la température entre 300 et 550°C, la vitesse spatiale horaire entre 0,05 et 5 h⁻¹, et un effluent hydroconverti est obtenu,
d) ladite fraction vaporisée et une fraction de l'effluent hydroconverti sont extraits en tête de réacteur,
e) la fraction non extraite de l'effluent hydroconverti est recyclée.

La charge traitée dans le cadre de la présente invention est une charge pétrolière qui contient au moins 30% poids de composés dont le point d'ébullition est supérieur à 350°C mais également une quantité significative de fractions légères, à savoir au moins 10% poids de composés dont la température d'ébullition est inférieure à 340°C.

Généralement, la teneur globale en métaux de la charge est supérieure à 50 ppm poids, voire 100 ppm poids, et la teneur en soufre globale supérieure à 2% poids. Préférentiellement, la charge traitée contient une quantité significative de résidu sous vide, ce qui se traduit par le fait qu'au moins 20% poids des composés présentent une température d'ébullition supérieure à 540°C. Encore plus préférentiellement, la charge contient au moins 40% poids de composés présentant une température d'ébullition supérieure à 540°C.

Elle peut être choisie parmi:
- les distillats sous vide;
- les résidus atmosphériques;
- les résidus sous vide de distillation directe;
- les résidus désasphaltés;
- les résidus issus de procédés de conversion tels que par exemple ceux provenant du coking;
- les pétroles bruts, notamment les bruts arabes légers, arabes lourds, Oural, Zuata, Boscan, Athabasca, Kuito et Duri;
- les bitumes extraits des gisements de schistes ou sables bitumineux;
- les charges liquides issues d'une hydroconversion en lit fixe telles que celles issues des procédés HYVAHL® de traitement des lourds mis au point par la demanderesse;
- les charges liquides issues des procédés d'hydrotraitement des lourds en lit bouillonnant telles que celles issues des procédés HOIL®;
- les huiles désasphaltées au solvant par exemple au propane, au butane, ou au pentane;
- les asphaltes (seuls ou en mélange) qui proviennent habituellement du désasphaltage de résidus sous vide de distillation directe ou de résidus sous vide des procédés H-OIL® ou HYVAHL®, seuls ou dilués par une fraction hydrocarbonée ou un mélange de fractions hydrocarbonées choisies dans le groupe formé par les huiles de coupe légère (LCO selon les initiales de la dénomination anglo-saxonne de Light Cycle Oil), les huiles décantées (DO selon les initiales de la dénomination anglo-saxonne de Decanted Oil), les fractions résiduelles des procédés de craquage pouvant contenir des suspensions de fines de catalyseur (appelées "slurry" en anglais) et les fractions gazoles, notamment celles obtenues par distillation sous vide dénommées selon la terminologie anglo-saxonne VGO (Vacuum Gas Oil).

De préférence, la charge est un pétrole brut.

La charge peut aussi être formée par mélange de ces diverses fractions dans n'importe quelles proportions.

La charge peut également contenir:
- des coupes gazoles et gazoles lourds provenant du cracking catalytique ayant en général un intervalle de distillation d'environ 150°C à environ 370°C, ou encore à 600°C ou à plus de 600°C;
- des extraits aromatiques obtenus dans le cadre de la fabrication d'huiles lubrifiantes;
- des effluents de procédé de traitement de biomasse.

Un avantage majeur d'injecter la charge en tête de réacteur dans le ciel gazeux est de pouvoir traiter directement, c'est à dire en l'absence d'étape de distillation en amont de la zone d'hydroconversion en lit bouillonnant, une charge pétrolière contenant une fraction significative de produits légers.

Un autre avantage d'injecter la charge en tête de réacteur dans le ciel gazeux est d'éviter la mise en contact avec le lit catalytique de la fraction vaporisable aux conditions de température et de pression du réacteur et ainsi d'obtenir une meilleure efficacité de contact entre le catalyseur et la phase liquide puisque les réactions de conversion et de désulfuration s'effectuent essentiellement dans la phase liquide. Il est ainsi possible d' optimiser les conditions de fonctionnement du réacteur et d'obtenir soit un niveau de conversion plus élevé avec une même quantité de catalyseur mise en oeuvre que si l'injection de la charge était réalisée selon la manière conventionnelle, soit un niveau de conversion identique avec une quantité de catalyseur moindre.

Un autre avantage important lié à la position de l'injection de la charge est de faciliter l'opération du réacteur en limitant la présence de gaz au sein de celui-ci. En effet, si la fraction volumique occupée par le gaz est trop élevée, la qualité de la fluidisation du catalyseur et donc la mise en expansion du lit catalytique peuvent être détériorées. De manière générale, il est souhaitable que la rétention gazeuse dans le lit soit limitée à 20-30% volumique. Un autre avantage procuré par la limitation de la rétention gazeuse dans le lit catalytique est de limiter les risques de moussage dans le réacteur, le moussage étant néfaste à l'opération du réacteur et au contrôle de l'ébullition du lit catalytique.

Selon le procédé de l'invention, la charge à traiter est injectée en tête de réacteur, dans le ciel gazeux et au dessus du niveau de liquide, comme représenté sur la figure 2. Ladite charge est séparée par vaporisation et grâce à un dispositif dédié qui sera décrit ultérieurement, en une fraction vaporisée et en une fraction liquide qui est seule à être soumise à l'hydroconversion. La fraction vaporisée est, quant à elle, extraite rapidement du réacteur. La fraction vaporisée aux conditions de température et de pression du réacteur représente généralement 10 à 80% poids de la fraction 540°C- de la charge (540°C-: composés dont la température d'ébullition est inférieure à 540°C), et de préférence de 20 à 70% de la fraction 540°C-.

L'injection de la charge est généralement réalisée le plus haut possible dans le réacteur afin de s'affranchir des fluctuations du niveau de liquide, de préférence à au moins 0,5 mètre au dessus du niveau de liquide et de manière plus préférée, à au moins 1 mètre au dessus du niveau de liquide.

L'injection peut être réalisée par un seul trou débouchant dans le réacteur mais une injection multi-points, par exemple à l'aide d'une couronne perforée, est également adaptée.

La position radiale de l'injection est sans avantage déterminant et peut donc être réalisée aussi bien en paroi qu'au centre du réacteur par un tube pénétrant.

En amont de l'injection dans le réacteur, la charge est optionnellement mélangée à de l'hydrogène d'appoint ou à un gaz de recycle riche en hydrogène. Il est en effet préférable, mais non nécessaire, de saturer la charge en hydrogène afin d'éviter la dégradation thermique des composés et d'optimiser les conditions du flash (selon la terminologie anglo-saxonne).

L'hydroconversion est réalisée dans au moins un réacteur triphasique en présence d'hydrogène avec au moins un catalyseur granulaire classique d'hydroconversion en lit bouillonnant. Ce catalyseur peut être un catalyseur comprenant au moins un métal du groupe VIII, par exemple du nickel et/ou du cobalt, le plus souvent en association avec au moins un métal du groupe VIB, par exemple du molybdène. On peut par exemple employer un catalyseur comprenant de 0,5 à 10% poids de nickel ou de cobalt, et de préférence de 1 à 5% en poids de nickel ou de cobalt (exprimé en oxyde de nickel ou de cobalt) et de 1 à 30% en poids de molybdène, de préférence de 5 à 20% en poids de molybdène (exprimé en oxyde de molybdène MoO3) sur un support contenant un oxyde minéral, de préférence choisi dans le groupe formé par l'alumine et la silice. Ce catalyseur est le plus souvent sous forme d'extrudés ou de billes, et préférentiellement sous forme d'extrudés de longueur comprise entre 1 et 10 mm et de diamètre compris entre 0,7 et 1,5 mm.

Le réacteur d'hydroconversion comporte au moins un moyen de soutirage du catalyseur hors dudit réacteur et au moins un moyen d'appoint de catalyseur frais dans ledit réacteur. Le catalyseur usagé est en partie remplacé par du catalyseur frais par soutirage progressif (périodique ou continu) en bas du réacteur de catalyseur usé et introduction progressive (périodiquement ou en continu) en haut du réacteur de catalyseur frais ou neuf , par exemple à intervalle de temps régulier, c'est à dire par exemple par ajout journalier. Le taux de remplacement du catalyseur usé par du catalyseur frais peut être par exemple d'environ 0,05 kilogramme à environ 10 kilogrammes par mètre cube de charge. Ce soutirage et ce remplacement progressifs sont effectuées à l'aide de dispositifs permettant le fonctionnement continu de cette étape d'hydroconversion. Le réacteur comporte habituellement une pompe de recirculation permettant le maintien du catalyseur en lit bouillonnant par recyclage continu d'au moins une partie du liquide soutiré en tête du réacteur et réinjecté en bas du réacteur.

Le réacteur opère habituellement sous une pression absolue de 3 à 50 MPa, de préférence entre 8 et 20 MPa, à une température comprise entre 300 et 550°C, de préférence entre 380 et 450°C. La vitesse volumique horaire (WH) du liquide et la pression partielle d'hydrogène sont des facteurs importants que l'on choisit en fonction des caractéristiques de la charge à traiter et de la conversion souhaitée. Le plus souvent, la WH du liquide est comprise entre 0,05 et 5 h⁻¹, de préférence entre 0,2 et 1 h⁻¹. Généralement, la pression partielle d'hydrogène est comprise entre 4,5 et 40 MPa, de préférence entre 5 et 15 MPa. La consommation d'hydrogène est généralement de 120 à 500 Nm³/m³ de charge.

Dans ces conditions, la conversion de la fraction ayant une température d'ébullition supérieure à 540°C en produits plus légers (en particulier essence et gazole) est généralement comprise entre 25 et 90% poids, préférentiellement entre 50 et 70% poids.

Le taux d' hydrodésulfuration est généralement compris entre 40 et 90% poids, préférentiellement entre 60 et 80% poids.

Le procédé selon l'invention est décrit pour un seul réacteur en lit bouillonnant mais il s'applique avantageusement dans le cas d'un enchaînement de réacteurs du même type, cet enchaînement permettant d'améliorer les performances du procédé en termes de conversion et de désulfuration. Le nombre de réacteurs en série est généralement de 1 à 3, de manière plus préférée égal à 2. Ainsi, lorsque plusieurs réacteurs sont en série avec une injection de charge en tête pour chaque réacteur, l'invention permet de s'affranchir avantageusement de la présence de séparateur(s) gaz-liquide inter-étages telle que décrite par exemple dans le brevet US 6,270,654 de la demanderesse, d'autant plus que la charge introduite dans un réacteur en aval du premier réacteur contient une fraction vaporisable (aux conditions du procédé) plus importante que la charge du premier réacteur compte tenu de l'avancement plus important des réactions.

Lorsque les réacteurs sont en série, la fraction d'effluent extraite en tête de réacteur constitue alors la charge du réacteur suivant.

Afin d'augmenter la capacité de traitement, plusieurs trains en parallèle de réacteurs en série peuvent également être envisagés.

De préférence, le procédé selon l'invention ne comporte pas d'étape de distillation en amont.

L'objet de l'invention pourra maintenant être mieux compris en regard des figures 1 et 2 qui ont un caractère illustratif mais en aucun cas limitatif.

La figure 1 illustre un procédé d'hydroconversion en lit bouillonnant de l'art antérieur alors que la figure 2 illustre le procédé de l'invention.

Sur la figure 1, la charge fraîche (20), préchauffée à une température généralement comprise entre 300 et 500°C est introduite dans un réacteur (1) en amont du lit catalytique (100). Elle est mélangée à de l'hydrogène (10) qui peut être préchauffé à une température comprise entre 100 et 1000°C, celui-ci étant éventuellement mélangé à un effluent gazeux recyclé constitué majoritairement d'H₂, et à un recycle interne de liquide (30). L'ensemble est distribué sur la section du réacteur (1) grâce à des moyens (7) tels qu'un plateau distributeur constitué d'une plaque perforée, ou d'une plaque contenant des cheminées avec des chapeaux dans lesquels coule le mélange gaz-liquide. La vitesse superficielle du liquide dans le réacteur est telle qu'elle excède largement la vitesse minimale de fluidisation des particules de catalyseur (généralement des extrudés de 1 mm de diamètre et de longueur comprise entre 2 et 10 mm). Elle est nettement en dessous de la vitesse minimum de transport des particules en présence de gaz aux conditions du procédé. De manière optimale, la vitesse de fluidisation est ajustée pour permettre une expansion du lit de catalyseur comprise entre 10 et 50% volume, préférentiellement comprise entre 20 et 40% volume. Le lit de catalyseur (100) est traversé par le liquide et la phase gazeuse qui est constituée de l'hydrogène et des produits de réaction ou des constituants de la charge vaporisés dans les conditions du procédé. Si la quantité des produits de réaction ou des constituants de la charge vaporisés aux conditions de réaction est importante, la place occupée par le gaz dans le réacteur augmente et peut excéder 20 à 30% de la fraction volumique dans la zone réactionnelle. La fraction volumique occupée par le liquide diminue alors, limitant alors les performances.

Au dessus du lit catalytique (100), dont la hauteur est déterminée par l'inventaire de catalyseur mis en oeuvre et les conditions de fluidisation, est présente une zone de désengagement (110) dans laquelle la quantité de catalyseur est très limitée et dépend uniquement de l'entraînement des plus petites particules du lit catalytique. Le mélange gaz- liquide passe ensuite par des séparateurs gaz-liquide (3), constitués par exemple de tubes à spirales permettant d'induire une centrifugation du mélange. Le liquide sort de ces tubes en périphérie et déborde dans un vase de dégazage ou coupe de recycle (4) dans lequel la vitesse du liquide est faible pour permettre aux bulles de gaz de désengager vers le haut. Une grande partie du liquide de ce vase (ou coupe) est donc recyclé vers des moyens de pompage (2) à travers une ligne de recyclage (30). Ces moyens de pompage permettent d'assurer un débit de recyclage de liquide suffisant pour maintenir dans la zone de réaction une vitesse de fluidisation optimum. En général, le débit liquide recyclé correspond à environ 2 à 10 fois le débit de charge fraîche, préférentiellement de 3 à 6 fois.

Les fractions gazeuses, dégazées dans le système de séparation constitué des éléments (3) et (4) sortent du réacteur par un conduit (6) plongeant, par des ouvertures latérales (5) avec la fraction de liquide qui n'est pas recyclée par la ligne (30).

La figure 2 (procédé selon l'invention) reprend les différents éléments de la figure 1, hormis que la charge (20) est introduite en tête de réacteur, dans le ciel gazeux. Sur la figure 2, aucun dispositif permettant d'améliorer la séparation de la fraction vaporisée et du liquide qui est ensuite dirigé vers le lit catalytique (100) n'est représenté.

L'invention porte également sur le réacteur opérant en lit bouillonnant, en présence d'un catalyseur, de gaz et de liquide, permettant de mettre en oeuvre le procédé selon l'invention qui comprend:
- une enceinte (1), contenant une zone réactionnelle (100) en lit bouillonnant et un ciel gazeux (500) en tête,
- une conduite (20) d'introduction de la charge située en tête de ladite enceinte et débouchant dans le ciel gazeux (500) de ladite enceinte,
- à l'intérieur de ladite enceinte et dans sa partie supérieure, un moyen de collecte (4) de liquide, séparant le ciel gazeux de la zone réactionnelle, et munie de séparateurs gaz-liquide (3) mettant en relation le ciel gazeux (500) avec la zone réactionnelle (100),
- un conduit de recycle (30) relié audit moyen (4) recyclant le liquide contenu dans ledit moyen vers le fond de l'enceinte,
- un conduit (6) permettant d'extraire en tête de l'enceinte le gaz et le liquide converti non recyclé,
- une conduite (10) d'introduction de gaz, de préférence de l'hydrogène, située en fond d'enceinte.

Avantageusement, le réacteur comprend au moins un moyen de séparation (400) situé dans le ciel gazeux et en face du conduit (20) favorisant la séparation, au sein de la charge, d' une fraction vaporisée et d'une fraction liquide.

De préférence, ledit moyen (400) est choisi parmi les plateaux de distribution, les garnissages structurés, les plaques à trous ou les grilles, et une plaque est préférée pour sa simplicité d'utilisation.

De façon particulièrement avantageuse, ledit moyen de séparation (400) coopère avec un moyen de circulation pour diriger directement la charge liquide vers le conduit de recycle (30).

En général, le moyen de séparation (400), qui de préférence est une plaque (en général à trous), sur lequel la charge impacte, est situé dans le ciel gazeux , et coopère avec le moyen de circulation comprenant une paroi (410) prolongeant le moyen (400) pour diriger la charge vers la périphérie du moyen de collecte , et un conduit (250) aménagé dans le moyen de collecte pour canaliser la charge vers le conduit de recycle (30).

Avantageusement, les séparateurs gaz-liquide (3) comprennent une entrée gaz-liquide (31), un dispositif (32) de mise en rotation de l'écoulement, une sortie gaz (34) située au dessus de la sortie liquide (35), la sortie du liquide étant excentrée par rapport à l'entrée gaz-liquide (31) et à la sortie gaz (34).

De préférence, la conduite (20) est située à au moins 0,5 m au dessus du niveau de liquide, ou encore à au moins 1 m au dessus du niveau de liquide.

De préférence, le moyen de collecte (4) est placé sur essentiellement toute la section de l'enceinte, et est en partie immergé dans le liquide.

Dans une réalisation avantageuse, le conduit (250) est délimité par une paroi (200) du moyen de collecte (4) et une paroi (300) reliée à la paroi (410), et comporte une ouverture (320) pour l'écoulement du liquide contenu dans le moyen de collecte (4) vers la conduite de recycle (30).

Ainsi, avantageusement, le réacteur comprend au moins un moyen pour favoriser la séparation, au sein de la charge, d'une fraction vaporisée et d'une fraction liquide et pour diriger ladite fraction liquide vers la zone réactionnelle (100). Ledit moyen est situé dans le ciel gazeux de l'enceinte et peut être tout moyen connu de l'Homme du métier favorisant le développement de l'aire interfaciale et le contact gaz-liquide, par exemple une plaque à trous, un plateau de distillation, un garnissage structuré ou une grille. Il est préférable de diriger dans un premier temps la fraction liquide séparée en périphérie du réacteur avant de la diriger dans un second temps, le plus directement possible vers le conduit de recycle (30) qui permet son introduction dans la zone réactionnelle, ceci afin d'éviter qu'une fraction trop importante de liquide non converti sorte par les fenêtres (5) et le conduit (6).

Le moyen de collecte (4) ou coupe de recycle telle que décrite, par exemple, dans le document EP1 275 425, est en général "jointive" avec les parois latérales de l'enceinte (1), à ceci près qu' un jeu peut également exister pour prendre en compte les phénomènes de dilatation thermique et par conséquent, une certaine fraction de liquide peut s'écouler vers la zone réactionnelle via ce jeu.

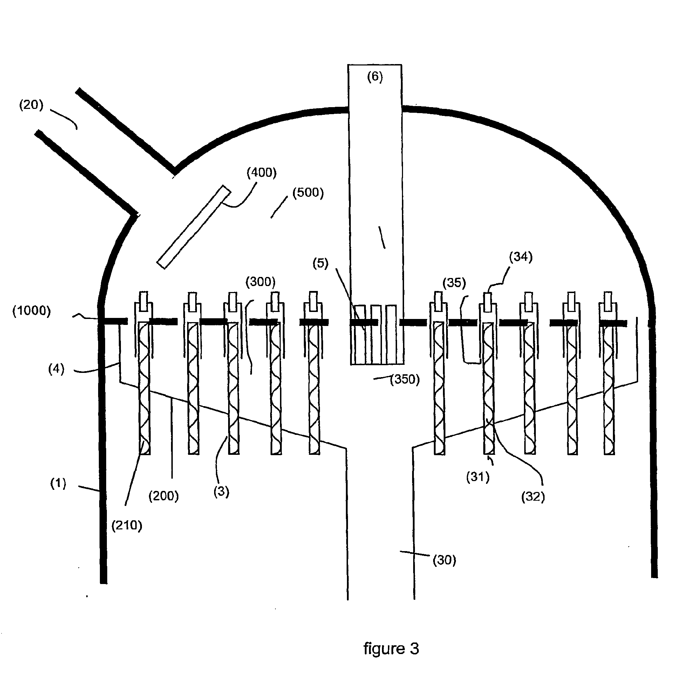

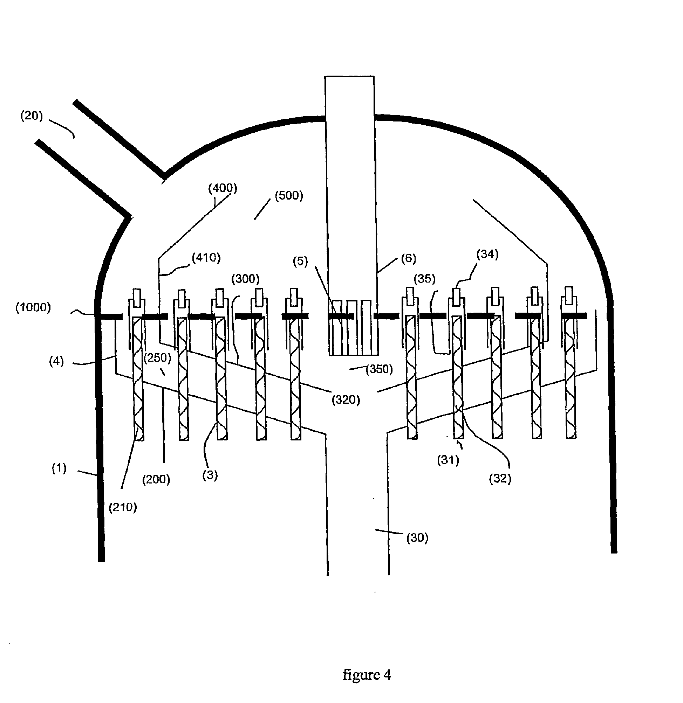

Ledit réacteur est maintenant décrit à partir des figures 3 et 4 qui représentent deux réalisations particulières de l'invention mais qui ne revêtent pas de caractère limitatif. Afin de ne pas alourdir la description, les figures 3 et 4 ne décrivent que la partie supérieure du réacteur qui est relative à l'invention, la partie inférieure étant connue par ailleurs. Dans la suite de la description, on se réfère également à des éléments des figures 1 et 2.

Il comprend une enceinte (1) munie d'une conduite (20), située en tête de l'enceinte et débouchant dans le ciel gazeux (500) du réacteur. La conduite (20) permet d'alimenter la charge préchauffée à une température généralement comprise entre 200 et 500°C et optionnellement mélangée à de l'hydrogène d'appoint ou à un gaz de recycle riche en hydrogène. La conduite (20) est de préférence située à au moins 0,5 m au dessus du niveau de liquide dans le moyen de collecte ou coupe de recycle (4), et de manière plus préférée à au moins 1 m au dessus dudit niveau de liquide. La conduite (20) d'introduction de la charge dirige celle-ci vers au moins un moyen (400) permettant, d'une part, de favoriser le contact de la fraction vaporisable de la charge avec la phase gazeuse (500) présente dans le ciel gazeux du réacteur, et d'autre part, de contribuer à diriger la fraction liquide de la charge vers le lit catalytique par l'intermédiaire d'un conduit de recycle (30) qui réintroduit la charge liquide en fond d'enceinte.

Ledit moyen (400) peut être tout moyen connu de l' Homme du métier favorisant le développement de l'aire interfaciale et le contact gaz-liquide et peut être, par exemple, un plateau de distillation, un garnissage structuré, une plaque à trous ou une grille.

Il est généralement placé en face de la sortie de la conduite (20) de façon à ce que la charge impacte sur celui-ci.

Selon le mode particulier de la figure 4, le moyen représenté de manière avantageuse mais non limitative, est une plaque perforée tronconique (400) faisant face à la conduite (20) et permettant de favoriser le contact entre la fraction vaporisée de la charge et la phase gazeuse (500). Avantageusement, la fraction liquide de la charge ruisselle sur la plaque (400) et est ensuite canalisée vers la zone réactionnelle par un déflecteur ou paroi (410) qui canalise la fraction liquide en périphérie du réacteur, et passe ensuite dans un conduit (250) délimité par les parois (200) et (300), respectivement faisant partie de la coupe de recycle et prolongeant la paroi (410). Le conduit (250) véhicule le liquide (non converti) vers le conduit de recycle interne de liquide (30) puis vers la pompe de recycle (2), ce qui permet de réinjecter le liquide dans le fond du réacteur et d'assurer ainsi le maintien en ébullition du catalyseur au sein du lit catalytique (100). L'élément regroupant la plaque (400) la paroi (410) et la paroi (300) délimite par symétrie de révolution une zone (350) riche en liquide hydroconverti et communiquant avec le conduit (250) amenant le liquide non converti vers le conduit de recycle (30), par une ouverture (320).

Pour les figures 3 et 4, le liquide véhiculé par le conduit de recycle (30) est mis en contact avec l'hydrogène injecté par la conduite (10) sous les moyens de distribution (7) et traverse le lit catalytique (100) au contact duquel il réagit. En sortie du lit catalytique, le liquide contenant les produits de la réaction et la fraction gazeuse contenant de l'hydrogène non consommé et d'autres gaz, traversent une zone (110) majoritairement exempte de catalyseur et dont l'interface avec la phase gazeuse est matérialisée par le niveau (1000) dans la coupe de recycle (4), et passent ensuite dans des séparateurs gaz-liquide (3) comprenant une entrée gaz-liquide (31), avantageusement un dispositif (32) de mise en rotation de l'écoulement qui peut être, par exemple, une hélice hélicoidale, une sortie gaz (34) située au dessus de la sortie liquide (35), la sortie du liquide étant excentrée par rapport à l'entrée gaz-liquide (31) et à la sortie gaz (34). Le gaz occupe l'espace du ciel gazeux (500) et est évacué du réacteur au travers de fenêtres (5) puis par un conduit (6). Les fenêtres (5) et le conduit (6) évacuent à la fois le gaz provenant de la zone réactionnelle et la fraction vaporisée de la charge qui n'est pas rentrée en contact avec le lit catalytique. Le liquide essentiellement dégazé provenant de la sortie liquide (35) séjourne dans la zone (350) de la coupe de recycle où il continue de dégazer et une partie de celui-ci est aspiré avec le gaz et sort du réacteur au niveau des fenêtres (5) puis par le conduit (6). Le reste du liquide passe par l'ouverture (320) et se mélange avec le liquide provenant du conduit (250) pour ensuite être recyclé par le conduit de recycle (30) vers la zone réactionnelle.

Le moyen de soutirage du gaz (5,6) ici décrit, qui permet de soutirer également le liquide converti, est une réalisation particulièrement avantageuse; tout autre moyen de soutirage du gaz et tout autre moyen de soutirage du liquide converti conviennent, que ces moyens soient séparés ou non.

Sur la figure 4, le déflecteur (410) et son prolongement dans la coupe de recycle (4) pour créer un espace (250) de circulation de la charge liquide est également une réalisation très avantageuse. Néanmoins, l'absence de déflecteur, ou bien un déflecteur sans prolongement sont d'autres modes de réalisation possibles, bien qu'ils soient moins performants. Le moyen (400) est également optionnel, mais son absence conduit à de moindres performances.

Bien qu'ils ne soient pas représentés sur les figures, le réacteur d'hydroconversion comporte également au moins un moyen de soutirage du catalyseur hors dudit réacteur et au moins un moyen d'appoint de catalyseur frais dans ledit réacteur.

La portée de l'invention est illustrée par l'exemple suivant.

### Exemple:

La charge utilisée pour cet exemple est la fraction C5+ d'un pétrole brut Arabian Heavy (noté C5+ARBH). Les gaz C1 à C4 ont été évacués lors d'une étape préliminaire, typiquement lors de la séparation eau/gaz/huile en sortie de puits. Les principales caractéristiques de cette charge sont présentées dans le tableau 1.

**Tableau 1: Caractéristiques de la charge C5+ARBH**

| | |
|---|---|
| | C5+ Arabian Heavy |
| API Gravity ° | 27,8 |
| Densité (60°F, 15,6°C) | 0,888 |
| Soufre (%pds) | 2,81 |
| Asphaltènes à l'heptane (%pds) | 3,9 |
| CCR (%pds) | 8,0 |
| V+Ni (ppm) | 75 |
| **Distillation** | |
| T °C | Rendement massique cumulé en % |
| 10 | 1,80 |
| 60 | 3,84 |
| 80 | 5,60 |
| 100 | 7,35 |
| 120 | 9,47 |
| 150 | 13,19 |
| 180 | 17,22 |
| 210 | 21,12 |
| 240 | 25,24 |
| 270 | 29,45 |
| 300 | 33,92 |
| 330 | 38,51 |
| 360 | 43,22 |
| 380 | 46,27 |
| 400 | 49,11 |
| 440 | 54,53 |
| 480 | 59,60 |
| 520 | 64,84 |
| 540 | 67,12 |
| 565 | 70,03 |

La réaction d'hydroconversion a été simulée au sein d'un unique réacteur de type lit bouillonnant dont les dimensions sont similaires à celles d'un réacteur industriel, typiquement de diamètre égal à 4,5 m. Le catalyseur employé est un catalyseur nickel-molybdène supporté sur alumine comprenant 4,5% de NiO et 10% poids de MoO₃ et la quantité de catalyseur mise en oeuvre est la même pour toutes les simulations. Le support alumine est extrudé et cylindrique. Les conditions opératoires (température, pression) sont fixées à 435°C et 160 bar (16 MPa). La pureté de l'hydrogène d'appoint est de 95%vol.

Les débits de charge fraîche et d'hydrogène sont ajustés afin d'obtenir une pression partielle d'hydrogène égale à 130 bars (13 MPa) et une rétention gazeuse (ou fraction volumique occupée par le gaz) au sein du réacteur de 20%. Dans le cas d'une simulation (n°1) où l'injection de la charge est réalisée selon l'état de l'art en bas du réacteur comme sur la figure 1 (conduite 20), on observe que ces valeurs de rétention gazeuse et de pression partielle d'hydrogène sont atteintes pour un débit de charge de C5+ARBH de 235000 kg/h et un débit d'hydrogène de 10700 kg/h. La VVH réacteur, définie comme le rapport du débit volumique de charge sur le volume du réacteur, est égale à 0.54h⁻¹. La conversion massique nette des produits dont le poids d'ébullition est supérieur à 540°C+ s'élève alors à 55,5%. Dans des conditions adaptées de renouvellement du catalyseur, l'HDS obtenue est de 79,4%.

Afin de quantifier les gains apportés par la mise en oeuvre de l'invention, nous simulons le cas où la même quantité de charge est introduite dans le ciel gazeux du réacteur, par la conduite (20) de la figure 2. Les conditions de la simulation sont telles que la charge est d'abord flashée aux conditions du réacteur (435°C - 16 MPa) avec les gaz issus de la zone réactionnelle et ayant traversé les séparateurs gaz/liquide (210). On constate que 21,1% poids de la charge fraîche introduite est vaporisée. Cette fraction vaporisée by-pass la zone réactionnelle et est extraite du réacteur. Dans ces conditions, les calculs montrent que pour un réacteur de taille identique et alimenté par la même charge, au même débit et dans les mêmes conditions opératoires, les performances globales sont nettement améliorées. En effet, on observe un gain très important en terme de conversion des composés dont le point d'ébullition est supérieur à 540°C (11,1 points). En terme d'hydrodésulfuration, on constate globalement aux bornes du réacteur un gain de l'HDS globale de 3,7 points par rapport à celle de la simulation n°1. Notons par ailleurs que la nouvelle fraction volumique gazeuse au sein de la zone réactionnelle est égale à 18%, ce qui est inférieur à celle de la simulation avec injection en bas de réacteur et ce qui laisse de la marge pour éventuellement sévériser les conditions et encore améliorer les performances.

En outre, la concentration en 540°C+ de la charge liquide est supérieure dans la simulation n°2, ce qui permet une meilleure conversion des composés les plus lourds (>540°C+). Les résultats des deux simulations, celle avec injection en bas de réacteur (n°1, non conforme à l'invention) et celle, conformément à l'invention, avec injection en tête de réacteur (n°2), sont récapitulés dans le tableau 2.

**Tableau 2: Résultats des deux simulations à iso-conditions et iso-débit de charge**

| *435°Cl 16 MPa* | Simulation n°1 | Simulation n°2 |
|---|---|---|
| Lieu d'injection de la charge C5+ARBHH | bas du réacteur bas du réacteur | tête de réacteur |
| Débit en entrée du réacteur (kg/h) | 235000 | 235000 |
| Débit de charge fraîche en entrée du lit catalytique (kg/h) | 235000 | 185392 |
| Temps de séjour réel (h) | 1,19 | 1,71 |
| ppH₂ (MPa) | 13 | 13 |
| Hydrogène d'appoint (kg/h) | 10700 | 10050 |
| Conversion en 540°C+ (%pds) | 55,5 | 66,6 |
| HDS globale (%pds) | 79,4 | 83,1 |

Les avantages de l'invention peuvent également être quantifiés en terme de capacité. Pour ce faire, une 3^{ème} simulation (n°3) est réalisée pour laquelle on calcule le débit de liquide issu du flash pouvant être injecté dans la zone réactionnelle tout en maintenant une fraction volumique gazeuse de 20%. Les conditions opératoires sont conservées identiques aux précédentes simulations (435°C/16 MPa). Le débit d'hydrogène est ajusté pour obtenir une pression partielle en hydrogène de 13 MPa. Les conditions de calcul du flash permettant de remonter au débit en entrée de réacteur sont conservées identiques celles de la simulation n°2.

Les résultats de la simulation n°3 sont présentés et comparés à la simulation n°1 dans le tableau 3. On constate qu'il est possible de passer de 235000kg/h de charge C5+ARBH traitée (simulation n°1, non conforme) à 254920 kg/h (simulation n°3, conforme), soit un gain massique de 8,5%. La mise en oeuvre du procédé selon l'invention conduit à de bien meilleures performances: +8,4 points en conversion des 540°C+ et +2,2 points d'HDS.

**Tableau 3: Résultats des simulations n°1 et n°3**

| *435°C* / *16 MPa* | Simulation n°1 | Simulation n°3 |
|---|---|---|
| Lieu d'injection de la charge C5+ARBH | bas du réacteur | tête de réacteur |
| Débit en entrée du réacteur (kg/h) | 235000 | 254920 |
| Débit de charge fraîche en entrée du lit catalytique (kg/h) | 235000 | 210500 |
| ppH₂ (MPa) | 13 | 13 |
| Hydrogène d'appoint (kg/h) | 10700 | 10940 |
| Conversion en 540°C+ (%pds) | 55,5 | 63,9 |
| HDS globale (%pds) | 79,4 | 81,6 |

## Revendications

1. Procédé d'hydroconversion de charge pétrolière opéré dans au moins un réacteur en lit bouillonnant dans lequel:
a) on injecte ladite charge en tête de réacteur dans le ciel gazeux,
b) ladite charge est séparée à l'intérieur du réacteur en une fraction vaporisée, aux conditions de température et de pression du réacteur, et en une fraction liquide,
c) dans ledit réacteur, ladite fraction liquide est mise en contact avec au moins un catalyseur d'hydroconversion avec de l'hydrogène dans des conditions telles que la pression absolue est comprise entre 3 et 50 MPa, la température entre 300 et 550°C, la vitesse spatiale horaire entre 0,05 et 5 h⁻¹, et un effluent hydroconverti est obtenu,
d) ladite fraction vaporisée et une fraction de l'effluent hydroconverti sont extraits en tête de réacteur,
e) la fraction non extraite de l'effluent hydroconverti est recyclée.

2. Procédé selon la revendication 1 dans lequel la charge pétrolière contient au moins 30% poids de composés dont le point d'ébullition est supérieur à 350°C et au moins 10% poids de composés dont la température d'ébullition est inférieure à 340°C.

3. Procédé selon l'une des revendications 1 ou 2 dans lequel la charge pétrolière contient au moins 20% poids de composés ayant une température d'ébullition supérieure à 540°C.

4. Procédé selon l'une des revendications 1 à 3 dans lequel la charge pétrolière est un pétrole brut.

5. Procédé selon l'une des revendications précédentes ne comportant pas d'étape de distillation en amont dudit procédé.

6. Procédé selon l'une des revendications précédentes dans lequel le nombre de réacteurs en série est de 1 à 3.

7. Procédé selon la revendication 6 dans lequel le nombre de réacteurs en série est égal à 2.

8. Procédé selon l'une des revendications précédentes dans lequel l'hydroconversion est opérée à une pression absolue comprise entre 3 et 50 MPa, à une température comprise entre 300 et 550°C, avec une vitesse spatiale horaire comprise entre 0,05 et 5 h⁻¹.

9. Procédé selon la revendication 8 dans lequel l'hydroconversion est opérée à une pression absolue comprise entre 8 et 20 MPa, à une température comprise entre 380 et 450°C, avec une vitesse spatiale horaire comprise entre 0,2 et 1 h⁻¹.

10. Procédé selon l'une des revendications précédentes dans lequel le catalyseur d'hydroconversion contient au moins un métal du groupe VIII.

11. Procédé selon la revendication 10 dans lequel le catalyseur d'hydroconversion comprend de 0,5 à 10% poids de nickel ou de cobalt et de 1 à 30% poids de molybdène.

12. Réacteur opérant en lit bouillonnant, en présence d'un catalyseur, de gaz et de liquide, comprenant:
- une enceinte (1), contenant une zone réactionnelle (100) en lit bouillonnant et un ciel gazeux (500) en tête,
- une conduite (20) d'introduction de la charge située en tête de ladite enceinte et débouchant dans le ciel gazeux (500) de ladite enceinte,
- à l'intérieur de ladite enceinte et dans sa partie supérieure, un moyen de collecte (4) de liquide, séparant le ciel gazeux de la zone réactionnelle, et munie de séparateurs gaz-liquide (3) mettant en relation le ciel gazeux (500) avec la zone réactionnelle (100),
- un conduit de recycle (30) relié audit moyen (4) recyclant le liquide contenu dans ledit moyen vers le fond de l'enceinte,
- un conduit (6) permettant d'extraire en tête de l'enceinte le gaz et le liquide converti non recyclé,
- une conduite (10) d'introduction de gaz située en fond d'enceinte.

13. Réacteur selon la revendication 12 comprenant au moins un moyen de séparation (400) situé dans le ciel gazeux et en face du conduit (20) favorisant la séparation, au sein de la charge, d' une fraction vaporisée et d'une fraction liquide.

14. Réacteur selon l'une des revendications 12 ou 13 dans lequel ledit moyen (400) est choisi parmi les plateaux de distribution, les garnissages structurés, les plaques, les grilles.

15. Réacteur selon l'une des revendications 13 ou 14 dans lequel ledit moyen de séparation (400) coopère avec un moyen de circulation pour diriger directement la charge liquide vers le conduit de recycle (30).

16. Réacteur selon l'une des revendications 12 à 15 dans lequel le moyen de séparation (400) sur lequel la charge impacte est situé dans le ciel gazeux et coopère avec le moyen de circulation comprenant une paroi (410) prolongeant le moyen (400) pour diriger la charge vers la périphérie du moyen de collecte, et un conduit (250) aménagé dans le moyen de collecte pour canaliser la charge vers le conduit de recycle (30).

17. Réacteur selon la revendication 16 dans lequel le moyen (400) est une plaque.

18. Réacteur selon l'une des revendications 12 à 17 dans lequel les séparateurs gaz-liquide (3) comprennent une entrée gaz-liquide (31), un dispositif (32) de mise en rotation de l'écoulement, une sortie gaz (34) située au dessus de la sortie liquide (35), la sortie du liquide étant excentrée par rapport à l'entrée gaz-liquide (31) et à la sortie gaz (34).

19. Réacteur selon l'une des revendications 12 à 18 dans lequel la conduite (20) est située à au moins 0,5 m au dessus du niveau de liquide.

20. Réacteur selon la revendication 19 dans lequel la lequel la conduite (20) est située à au moins 1 m au dessus du niveau de liquide.

21. Réacteur selon l'une des revendications précédentes dans lequel le moyen de collecte (4) est placé sur essentiellement toute la section de l'enceinte, en partie immergé dans le liquide.

22. Réacteur selon l'une des revendications 12 à 21 dans lequel le conduit (250) est délimité par une paroi (200) du moyen de collecte (4) et une paroi (300) reliée à la paroi (410), et comporte une ouverture (320) pour l'écoulement du liquide contenu dans le moyen de collecte (4) vers la conduite de recycle (30).

## Claims

1. A method of hydroconverting a petroleum feed in at least one ebullated-bed reactor, comprising:
a) injecting said feed at the top of the reactor in the gas overhead,
b) separating said feed within the reactor into a vaporized fractions, under the temperature and pressure conditions of the reactor, and a liquid fraction,
c) in said reactor, contacting said liquid fraction with at least one hydroconversion catalyst with hydrogen under such conditions that the absolute pressure ranges between 3 and 50 MPa, the temperature between 300°C and 550°C, the hourly space velocity between 0,05 and 5 h⁻¹, and obtaining a hydroconverted effluent,
d) extracting said vaporized fraction and a fraction of the hydroconverted effluent at the reactor top,
e) recycling the non-extracted hydroconverted effluent fraction.

2. A method as claimed in claim 1, wherein the petroleum feed contains at least 30% by weight of compounds whose boiling-point temperature is above 350°C and at least 10% by weight of compounds whose boiling-point temperature is below 340°C.

3. A method as claimed in any one of claims 1 or 2, wherein the petroleum feed contains at least 20% by weight of compounds having a boiling-point temperature above 540°C.

4. A method as claimed in any one of claims I to 3, wherein the petroleum feed is a crude oil.

5. A method as claimed in any one of the previous claims, comprising no distillation stage upstream from said process.

6. A method as claimed in any one of the previous claims, wherein the number of reactors in series ranges from 1 to 3.

7. A method as claimed in claim 6, wherein the number of reactors in series is 2.

8. A method as claimed in any one of the previous claims, wherein hydroconversion is operated at an absolute pressure ranging between 3 and 50 MPa, at a temperature ranging between 300°C and 550°C, with an hourly space velocity ranging between 0.05 and 5 h⁻¹.

9. A method as claimed in claim 8, wherein hydroconversion is operated at an absolute pressure ranging between 8 and 20 MPa, at a temperature ranging between 380°C and 450°C, with an hourly space velocity ranging between 0.2 and I h⁻¹.

10. A method as claimed in any one of the previous claims, wherein the hydroconversion catalyst contains at least one group VII metal.

11. A method as claimed in claim 10, wherein the hydroconversion catalyst contains 0.5 to 10% by weight of nickel or cobalt and 1 to 30% by weight of molybdenum.

12. A reactor operating under ebullated bed conditions, in the presence of a catalyst, gas and liquid, comprising:
- an enclosure (1) containing an ebuilated-bed reaction zone (100) and a gas overhead (500) at the top,
- a feed delivery line (20) arranged at the top of said enclosure and opening into gas overhead (500) of said enclosure,
- inside said enclosure and in its upper part, a liquid collecting means (4) separating the gas overhead from the reaction zone, provided with gas-liquid separators (3) connecting gas overhead (500) and reaction zone (100),
- a recycling line (30) connected to said means (4) recycling the liquid contained in said means to the bottom of the enclosure,
- a pipe (6) allowing to extract at the top of the enclosure the non-recycled converted liquid and gas,
- a gas delivery line (10) arranged at the bottom of the enclosure.

13. A reactor as claimed in claim 12, comprising at least one separation means (400) located in the gas overhead and opposite line (20) favouring separation, within the feed, of a vaporized fraction and of a liquid fraction.

14. A reactor as claimed in any one of claims 12 or 13, wherein said separation means (400) is selected from among distribution plates, structured packings, plates, grates.

15. A reactor as claimed in any one of claims 13 or 14, wherein said separation means (400) cooperates with a circulation means for sending the liquid feed directly to recycling line (30).

16. A reactor as claimed in any one of claims 12 to 15, wherein separation means (400), on which the feed impacts, is located in the gas overhead, and it cooperates with the circulation means comprising a wall (410) forming an extension of means (400) for sending the feed to the periphery of the collecting means and a pipe (250) provided in the collecting means for channelling the feed towards recycling line (30).

17. A reactor as claimed in claim 16, wherein means (400) is a plate.

18. A reactor as claimed in any one of claims 12 to 17, wherein gas-liquid separators (3) comprise a gas-liquid inlet (31), a device (32) for rotating the flow, a gas outlet (34) located above liquid outlet (35), the liquid outlet being off-centre in relation to gas-liquid inlet (31) and gas outlet (34).

19. A reactor as claimed in any one of claims 12 to 18, wherein line (20) is located at least 0.5 m above the liquid level.

20. A reactor as claimed in claim 19, wherein line (20) is located at least 1 m above the liquid level.

21. A reactor as claimed in any one of the previous claims, wherein collecting means (4) is arranged over essentially the entire cross-section of the enclosure, and it is partly immersed in the liquid.

22. A reactor as claimed in any one of claims 12 to 21, wherein pipe (250) is delimited by a wall (200) of collecting means (4) and a wall (300) connected to wall (410), and it comprises an opening (320) allowing the liquid contained in collecting means (4) to flow into recycling line (30).

## Patentansprüche

1. Verfahren zur hydrierenden Umwandlung einer Erdölcharge, welches in mindestens einem Wirbelbettreaktor durchgeführt wird, wobei:
a) die Charge am Kopfende des Reaktors in die Gasphase eingeleitet wird,
b) die Charge im Inneren des Reaktors in eine Fraktion, die unter den Temperatur- und Druckbedingungen des Reaktors verdampft, und eine flüssige Fraktion aufgetrennt wird,
c) die flüssige Fraktion in dem Reaktor mit mindestens einem Katalysator zur hydrierenden Umwandlung mit Wasserstoff in Kontakt gebracht wird, wobei die Bedingungen derart sind, dass der Absolutdruck im Bereich von 3 bis 50 MPa, die Temperatur im Bereich von 300 bis 550 °C und die Raumgeschwindigkeit pro Stunde im Bereich von 0,05 bis 5 h⁻¹ liegen, und ein hydrokonvertierter Stoffstrom erhalten wird.
d) die verdampfte Fraktion und eine Fraktion des hydrokonvertierten Stoffstroms am Kopfende des Reaktors entnommen werden,
e) die Fraktion des hydrokonvertierten Stoffstroms, die nicht entnommen wird, zurückgeführt wird.

2. Verfahren nach Anspruch 1, wobei die Erdölcharge mindestens 30 Gewichts% an Verbindungen, deren Siedepunkt mehr als 350 °C beträgt, und mindestens 10 Gewichts% an Verbindungen enthält, deren Siedetemperatur weniger als 340 °C beträgt, enthält.

3. Verfahren nach einem der Ansprüche 1 oder 2, wobei die Erdölcharge mindestens 20 Gewichts% an Verbindungen mit einer Siedetemperatur von mehr als 540 °C enthält.

4. Verfahren nach einem der Ansprüche 1 bis 3, wobei es sich bei der Erdölcharge um ein Rohöl handelt.

5. Verfahren gemäß einem der vorhergehenden Ansprüche, wobei dem Verfahren keinerlei Destillationsschritt vorgeschaltet ist.

6. Verfahren gemäß einem der vorhergehenden Ansprüche, wobei die Anzahl der in Reihe angeordneten Reaktoren 1 bis 3 beträgt.

7. Verfahren nach Anspruch 6, wobei die Anzahl der in Reihe angeordneten Reaktoren 2 beträgt.

8. Verfahren gemäß einem der vorhergehenden Ansprüche, wobei die hydrierende Umwandlung bei einem Absolutdruck im Bereich von 3 bis 50 MPa, einer Temperatur im Bereich von 300 bis 550 °C, mit einer Raumgeschwindigkeit pro Stunde im Bereich von 0,05 bis 5 h-' durchgeführt wird.

9. Verfahren nach Anspruch 8, wobei die hydrierende Umwandlung bei einem Absolutdruck im Bereich von 8 bis 20 MPa, einer Temperatur im Bereich von 380 bis 450 °C, mit einer Raumgeschwindigkeit pro Stunde im Bereich von 0,2 bis 1 h⁻¹ durchgeführt wird.

10. Verfahren gemäß einem der vorhergehenden Ansprüche, wobei der Katalysator zur hydrierenden Umwandlung mindestens ein Metall der Gruppe VIII enthält.

11. Verfahren nach Anspruch 10, wobei der Katalysator zur hydrierenden Umwandlung 0,5 bis 10 Gewichts% an Nickel oder an Kobalt und 1 bis 30 Gewichts% an Molybdän umfasst.

12. Reaktor, der als in Gegenwart eines Katalysator als Wirbelbett aus Gasen und Flüssigkeit betrieben wird, umfassend:
- einen Hohlraum (1), der einen Reaktionsbereich (100) in Form eines Wirbelbetts und im Kopfbereich eine Gasphase (500) enthält,
- eine Leitung (20) zum Einleiten der Charge, die sich im Kopfbereich des Hohlraum befindet und in die Gasphase (500) des Hohlraums einmündet,
- im Inneren des Hohlraums und in dessen oberem Abschnitt, ein Mittel (4) zum Auffangen von Flüssigkeit, das die Gasphase vom Reaktionsbereich trennt und mit Gas/Flüssigkeits-Trennvorrichtungen (3) versehen ist, welche die Gasphase (500) mit dem Reaktionsbereich (100) verbinden.
- eine Rückführungsleitung (30), die mit dem Mittel (4) verbunden ist und die Flüssigkeit, die in dem Mittel enthalten ist, in Richtung des Bodens des Hohlraums zurückführt,
- eine Leitung (6), die es ermöglicht, im Kopfbereich des Hohlraums das Gas und die umgewandelte Flüssigkeit, die nicht zurückgeführt wurde, zu entnehmen,
- eine Leitung (10) zur Einleiten von Gas, die sich am Boden des Hohlraums befindet.

13. Reaktor nach Anspruch 12, der mindestens ein Trennmittel (400) umfasst, das sich in der Gasphase und gegenüber der Leitung (20) befindet und, innerhalb der Charge, die Trennung einer verdampften Fraktion und einer flüssigen Fraktion begünstigt.

14. Reaktor nach einem der Ansprüche 12 oder 13, wobei das Mittel (400) aus Verteilerböden, strukturierten Einbauten, Platten, Gittern ausgewählt ist.

15. Reaktor nach einem der Ansprüche 13 oder 14, wobei das Trennmittel (400) mit einem Strömungsfördermittel zusammenwirkt, um die flüssige Charge direkt der Rückführungsleitung (30) zuzuführen.

16. Reaktor nach einem der Ansprüche 12 bis 15, wobei das Trennmittel (400), auf das die Charge trifft, sich in der Gasphase befindet und mit dem Strömungsfördermittel zusammenwirkt, welches eine Wand (410) umfasst, die das Mittel (400) verlängert, um die Charge dem Randbereich des Auffangmittels zuzuführen, und eine Leitung (250) in dem Auffangmittel vorgesehen ist, um die Charge gebündelt der Rückführungsleitung (30) zuzuführen.

17. Reaktor nach Anspruch 18, wobei das Mittel (400) eine Platte ist.

18. Reaktor nach einem der Ansprüche 12 bis 17, wobei die Gas/Flüssigkeits-Trennvorrichtungen (3) eine Gas/Flüssigkeits-Eintrittsöffnung (31), eine Vorrichtung (32), welche die Strömung in eine Drehbewegung versetzt, eine Gas-Austrittsöffnung (34), die sich oberhalb der Flüssigkeits-Austrittsöffnung (36) befindet, umfassen, wobei die Austrittsöffnung der Flüssigkeit abseits der Gas/Flüssigkeits-Eintrittsöffnung (31) und der Gas-Austrittsöffnung (34) angeordnet ist.

19. Reaktor nach einem der Ansprüche 12 bis 18, wobei sich die Leitung (20) mindestens 0,5 m oberhalb des Flüssigkeitsspiegels befindet.

20. Reaktor nach Anspruch 19, wobei sich die Leitung (20) mindestens 1 m oberhalb des Flüssigkeitsspiegels befindet.

21. Reaktor nach einem der vorhergehenden Ansprüche, wobei das Auffangmittel (4) sich im Wesentlichen über den gesamten Querschnitt des Hohlraums erstreckt, wobei es teilweise in die Flüssigkeit eintaucht.

22. Reaktor nach einem der Ansprüche 12 bis 21, wobei die Leitung (250) von einer Wand (200) des Auffangmittels (4) und einer Wand (300), die mit der Wand (410) verbunden ist, begrenzt wird und eine Öffnung (320) aufweist, durch welche die Flüssigkeit, die in dem Auffangmittel (4) enthalten ist, in Richtung der Rückführungsleitung (30) fließen kann.
